# EUROPEAN PATENT APPLICATION

(11) **EP 4 819 619 A1**
(43) Date of publication of application: **07.10.2026**
(21) Application number: 25167310.9
(22) Date of filing: 31.03.2025
(51) Int. Cl.: H04N 21/442, H04N 21/462, H04N 21/61

(54) **ELECTRONIC DEVICE AND METHOD FOR RECOVERING PLAYBACK**

(71) Applicant: MediaTek Singapore Pte Ltd, Singapore 138628 (SG)
(72) Inventor: WANG, Changqin, Hefei Anhui (CN); GUI, Zhiqiang, Hefei Anhui (CN); HU, Xiaojun, Hefei Anhui (CN)
(74) Representative: Hoefer & Partner Patentanwälte mbB

(57) **Abstract**

An electronic device comprising a controller and a display is provided. The controller is configured to detect when no signal source is available (41). In response to a determination that no signal source is available, the controller is further configured to determine whether a broadcast source exists (42). The controller is further configured to determine whether stream source exists (43); in response to a determination that the broadcast source and/or the stream source exist, the controller is further configured to monitor the broadcast source and/or the stream source (44). The electronic device uses the digital video broadcasting Internet, DVB-I, standard. The broadcast source provides signals using a DVB standard. The stream source provides signals from the Internet.

## Description

### BACKGROUND OF THE INVENTION

### Field of the Invention

The present invention relates to devices that use the digital video broadcasting Internet (DVB-I) standard, and, in particular, it relates to methods for recovering the playback in such devices.

### Description of the Related Art

Digital video broadcasting (DVB) includes multiple standards designed for digital television. Digital video broadcasting Internet (DVB-I) is one of the standards among DVB. DVB-I provides service to devices through a network and a traditional linear channel. A device may have multiple signal sources. When signal sources are cut off, the device has to find an available signal source. Finding an available signal source and recovering the playback as soon as possible is vital to the user experience. Thus, solutions for finding an available signal source among signal sources are required. Solutions for recovering playback when any one of the signal sources becomes available are required.

### BRIEF SUMMARY OF THE INVENTION

A method and an electronic device according to the invention are defined in the independent claims. The dependent claims define preferred embodiments thereof. An embodiment of the present invention provides a method for recovering playback. The method comprises detecting that no signal source is available via a controller of an electronic device. The electronic device uses the digital video broadcasting Internet (DVB-I) standard. In response to a determination that no signal source is available, the method comprises the following operations. The controller determines whether a broadcast source exists. The controller determines whether at least one stream source exists. In response to a determination that the broadcast source and/or the stream source exist, the broadcast source and/or the stream source are monitored. The broadcast source provides signals that use a DVB standard. The stream source provides signals from the Internet.

An embodiment of the present invention provides an electronic device comprising a controller and a display. The controller is configured to detect that no signal source is available. In response to a determination that no signal source is available, the controller is further configured to determine whether a broadcast source exists. The controller is further configured to determine whether at least one stream source exists. In response to a determination that the broadcast source and/or a stream source exist, the controller is further configured to monitor the broadcast source and/or the stream source. The electronic device uses the digital video broadcasting Internet (DVB-I) standard. The broadcast source provides signals that use a DVB standard. The stream source provides signals from the Internet.

### BRIEF DESCRIPTION OF THE DRAWINGS

The present invention can be more fully understood by reading the subsequent detailed description and examples with references made to the accompanying drawings, wherein:
FIG. 1 is a block diagram of the electronic device in accordance with the embodiments of the present disclosure;
FIG. 2 is a schematic diagram in accordance with the embodiments of the present disclosure;
FIG. 3 is a flow diagram of the method for recovering playback in accordance with the embodiments of the present disclosure; and
FIG. 4 is a flow diagram of the method for recovering playback in accordance with the embodiments of the present disclosure.

### DETAILED DESCRIPTION OF THE INVENTION

The following description is made for the purpose of illustrating the general principles of the invention and should not be taken in a limiting sense. The scope of the invention is best determined by reference to the appended claims.

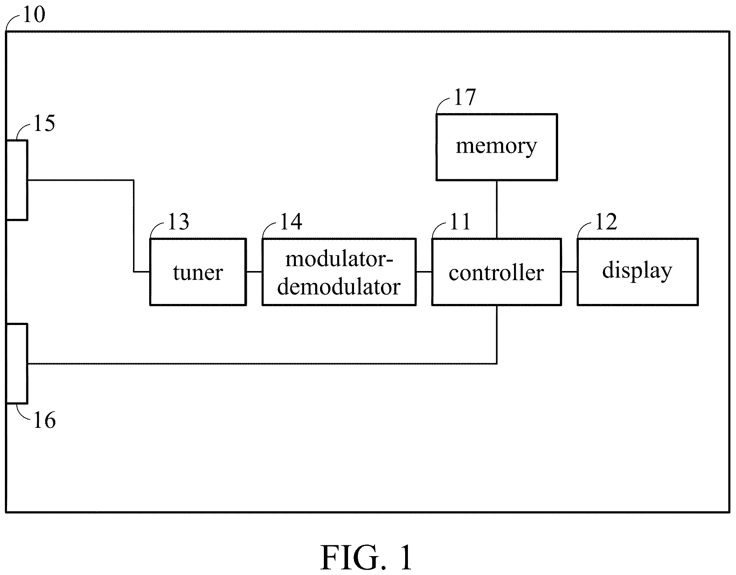

FIG. 1 is a block diagram of the electronic device 10 in accordance with the embodiments of the present disclosure. Preferably, the electronic device 10 uses (applies) DVB-I standard. For example, the electronic device 10 may be digital television, player, computer, or mobile device. Preferably, the electronic device 10 comprises a controller 11, a display 12, a tuner 13, a modulator-demodulator 14, a broadcast signal interface 15, and a network interface 16, and a memory 17.

The controller 11 provides the required process and calculation capability to implement the method of the embodiments. For example, the controller 11 may provide the process and calculation capability to perform programs, software, modules, applications, and functions. Preferably, the controller 11 may be implemented in the form of hardware with electronic components, such as transistors, diodes, capacitors, resistors, or inductors. These components are configured and arranged to achieve specific purposes in accordance with the embodiments of the present disclosure. For example, the controller 11 may include a television processor, a micro- controller, a microprogrammed control unit (MCU), a general purpose micro-processor, a central processing unit (CPU), an application processor, an image signal processor, a digital signal processor, and/or related chip set.

The display 12 displays images and contents under the control of the controller 11. The tuner 13 and the modulator-demodulator 14 connect to the broadcast signal interface 15. The tuner 13 is configured to reduce the frequency of the high-frequency signal received from the broadcast signal interface 15 the medium frequency or low frequency. The modulator-demodulator 14 is configured to demodulate the medium-frequency or low-frequency signal from the tuner 13 and transmit the demodulated signal to the controller 11. Then, the controller 11 is configured to control the display 12 to display images and contents based on the demodulated signal.

The broadcast signal interface 15 and the network interface 16 are physical interfaces or ports. The broadcast signal interface 15 connects to the broadcast source, and the network interface 16 connects to the stream source. The broadcast source and the stream source are signal sources provide signal to the electronic device 10. The electronic device 10 displays contents, such as images, audio, or video, on the display 12 according to the signal from the broadcast source and the stream source. Preferably, the broadcast source provides the signal through the traditional linear channel of the television. Preferably, the broadcast source provides signals using (in comply with) a DVB standard. Preferably, the broadcast source provides signals using a DVB standard other than Internet. Alternatively or additionally preferably, the broadcast source provides signals using Internet. Preferably, the broadcast source provides signals using DVB terrestrial (DVB-T) or DVB cable (DVB-C). In this case, the broadcast source may be the terrestrial network or base station. Preferably, the broadcast source provides signals using DVB satellite (DVB-S). In this case, the broadcast source may be the satellite. The stream source provides signals from the Internet. The stream source may be a server or base station. Preferably, there are multiple stream sources. Each of the stream source corresponds to a uniform resource locator (URL). The electronic device 10 receives signals from these stream sources through the network interface 16. Preferably, there is only one broadcast source, and there is at least one stream source.

Preferably, the broadcast signal interface 15 and the network interface 16 may connects to a cable or an Ethernet cable to receive signals from the broadcast source and the stream source. Preferably, the broadcast signal interface 15 and the network interface 16 may connects to an antenna to wirelessly receive signals from the broadcast source and the stream source. Furthermore, the electronic device 10 may further comprise other devices which aren't shown in FIG. 1. For example, the electronic device 10 may further comprises a storage device, such as read only memory, a flash memory, or a buffer. The storage device may store instructions. When these instructions are read and performed by the controller 11, these instructions cause the controller 11 to implement method in accordance with the embodiments of the present disclosure.

The memory 17 stores data required by the controller 11. The memory 17 may include non-volatile memories, such as read only memory (ROM) and flash memory. The memory 17 may also include volatile memories, such as dynamic random access memory (DRAM) and static random access memory (SRAM). Preferably, the memory 17 stores a program (e.g. computer-readable instruction). The program can be operated by the controller 11. When the program is operated by the controller 11, the program causes the controller 11 to implement methods according to the embodiments of the present disclosure.

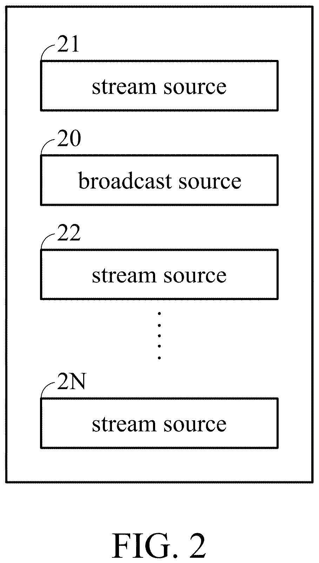

FIG. 2 is a schematic diagram in accordance with the embodiments of the present disclosure. In the example shown in FIG. 2, there is one broadcast source (broadcast source 20) and N stream sources (stream sources 21~2N). Stream sources 21~2N may respectively corresponds to a URL. The electronic device 10 can only playback signal of one of the signal sources. The controller 10 is configured to determine the priorities of the broadcast source 20 and the stream sources 21~2N based on the algorithm defined in DVB-I. The controller 10 determines to display contents based on the signal of the signal source with the highest priority. In the example shown in FIG. 2, stream source 21 has the highest priority, the broadcast source 20 has the second highest priority, the stream source 22 has the third highest priority, and so on. the stream source 2N has the lowest priority. When the stream source 21 is available, the electronic device 10 playbacks signal of the stream source 21. When the stream source 21 isn't available, the electronic device 10 playbacks signal of the broadcast source 20. When a signal source provides (valid) signal, the signal source is determined to be available. When a signal source doesn't provide (valid) signal, the signal source is determined to be unavailable.

When there's no signal source is available, the electronic device 10 has to monitor the broadcast source 20 and the stream source 21~2N in order to determine whether any signal source becomes available. First, the electronic device 10 may try to receive a signal from the stream source 21 and determine whether the stream source 21 is available. For example, the electronic device 10 may align the receiving band to the frequency band of the stream source 21. After determining that the stream source 21 is unavailable, the electronic device 10 may set the tuner 13, the modulator-demodulator 14, and/or the filter to receive a signal from the broadcast source 20 and to determine whether a broadcast source 20 is available, and so on. Finally, the electronic device 10 may monitor the stream source 2N or go back to the stream source 21. After the electronic device 10 staying at the stream source 2N or the stream source 21, it takes a long time for the electronic device 10 to find out that the broadcast source 20 or other stream sources become available and start to receive the signal from the available signal source.

Embodiments of the present disclosure allow the electronic device 10 to monitor all the signal sources to find the available signal source in a short time. When anyone of the broadcast source 20 and the stream source 20~2N becomes available, embodiments of the present disclosure allow the electronic device 10 to play the signal of the available signal source.

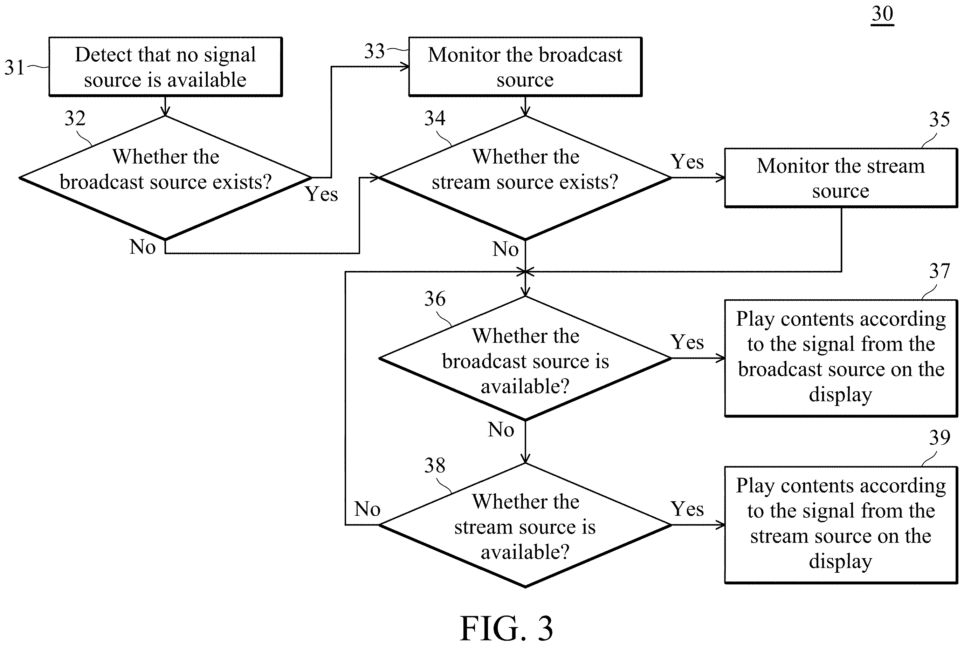

FIG. 3 is a flow diagram of the method 30 for recovering playback in accordance with the embodiments of the present disclosure. The method 30 can be performed by the electronic device 10. Preferably, as shown in FIG. 2, the electronic device 10 has one broadcast source and multiple stream sources. Alternatively preferably, the electronic device 10 has one broadcast source and one stream source. In operation 31, the controller 11 detects that no signal source is available. Preferably, the controller 11 detects that no signal is received from all of the broadcast source and the stream source. In response to a determination that no signal source is available, the controller 11 performs operation 32.

In operation 32, the controller 11 determines whether a broadcast source exists. Preferably, the controller 11 determines whether the memory 17 stores information corresponding to the broadcast source. Specifically, during a channel-scanning stage, the controller 11 stores the information for each channel (television channel) in the memory 17. The information may indicate the available sources (broadcast source, stream source, or broadcast source and stream source) of each channel. The information may further indicate the frequency band or the address of the source of each channel. Preferably, whether a channel has a broadcast source or a stream source is defined by the DVB-I service. Preferably, the memory 17 is a DVB-I database. The DVB-I data base may be the database configured to store the information for each (television) channel. The information may be the URL and/or the identification/index of the broadcast source and stream source and. When the memory 17 stores information corresponding to the broadcast source (i.e. the information stores in the memory 17 indicates that at least one channel has a broadcast source), the controller 11 determines that the broadcast source exists. When the memory 17 doesn't store information corresponding to the broadcast source (i.e. the information stores in the memory 17 indicates that there's no channel has a broadcast source), the controller 11 determines that the broadcast source doesn't exist. In response to a determination that a broadcast source exists, the controller 11 performs operation 33. In response to a determination that a broadcast source doesn't exist, the controller 11 performs operation 34. In operation 33, the controller 11 monitors the broadcast source. Preferably, the tuner 13 or the modulator-demodulator 14 is configured to determine whether the broadcast signal interface 15 receives a signal, in order to monitor the broadcast source.

In operation 34, the controller 11 determines whether the stream source exists. The operation 32 of determining whether the broadcast source exists is performed in advance of the operation 34 of determining whether the at least one stream source exists. Preferably, similar to the operation 32, the controller 11 determines whether the memory 17 stores information corresponding to the stream source. When the memory 17 stores information corresponding to the stream source (i.e. the information stores in the memory 17 indicates that at least one channel has a broadcast source), the controller 11 determines that the stream source exists. When the memory 17 doesn't store information corresponding to the stream source (i.e. the information stores in the memory 17 indicates that there's no channel has a broadcast source), the controller 11 determines that the stream source doesn't exist. In response to a determination that a stream source exists, the controller 11 performs operation 35. In response to a determination that a stream source doesn't exist, the controller 11 performs operation 36. In operation 35, the controller 11 monitors the stream source. Preferably, the tuner 13 or the modulator-demodulator 14 is configured to determine whether the network interface 16 receives a signal, in order to monitor the stream source.

In operation 36, the controller 11 determines whether a broadcast source is available. When the broadcast source is available, the controller 11 performs operation 37. When the broadcast source isn't available, the controller 11 performs operation 38. The tuner 13 or the modulator-demodulator 14 may transmit a signal indication indicating that the broadcast signal interface 15 receives the signal to the controller 11, and the controller 11 may determine that the broadcast source is available based on the signal indication. Otherwise, the controller 11 determines that the broadcast source is unavailable. In operation 37, the electronic device 10 plays contents according to the signal from the broadcast source on the display 12.

In another example, during the operation 34, if the controller 11 determines that the stream source doesn't exist. the controller 11 performs operation 36 until the broadcast source is available and performs the operation 37. In other words, if the controller 11 determines that the stream source doesn't exist during the operation 34 and the controller 11 determines that the broadcast source is not available, the controller 11 repeatedly executes the operation 36 until the broadcast source is available, instead of performing the operation 38.

In operation 38, the controller 11 determines whether the stream source is available. When the stream source is available, the controller 11 performs operation 39. When the stream source isn't available, the controller 11 performs operation 36. The controller 11 may determine whether the network interface 16 receives a signal. When the network interface 16 receives a signal, the controller 11 determines that the stream source is available. Otherwise, the controller 11 determines that the stream source is unavailable. In operation 39, the electronic device 10 plays contents according to the signal from the stream source on the display 12. In operation 39, when there are multiple stream sources, the controller 11 selects the first stream source with the highest priority among the stream sources. The controller 11 determines the priority according to the algorithm defined in DVB-I. then, the electronic device 10 plays contents according to the signal from the first stream source on the display 12. Alternatively, when there is only one stream source, the electronic device 10 may play contents according to the signal from the stream source in operation 39.

It is noted that when the controller 11 determines that both the broadcast source and the stream source exist, the controller 11 monitors the broadcast source and all the stream source simultaneously, via determining whether the broadcast signal interface 15 and the network interface 16 receive a signal. Thus, when anyone of the broadcast source and the stream source is recovered, the controller 11 can immediately detect that a signal source becomes available. Furthermore, the broadcast source has the higher priority than the stream source in the method of the embodiments, ignoring the priority determined using the DVB-I algorithm. Comparing to stream sources, the broadcast source is usually able to provide a response in a shorter time, and thus the playback of the channel can be recovered faster using the broadcast source. Moreover, there is only one broadcast source, selecting one of source, including broadcasting or stream source, based on priority will be taken long time and it's not friendly to end-user for playback experience. Thus, it is beneficial to prioritize the broadcast source in the recovery process.

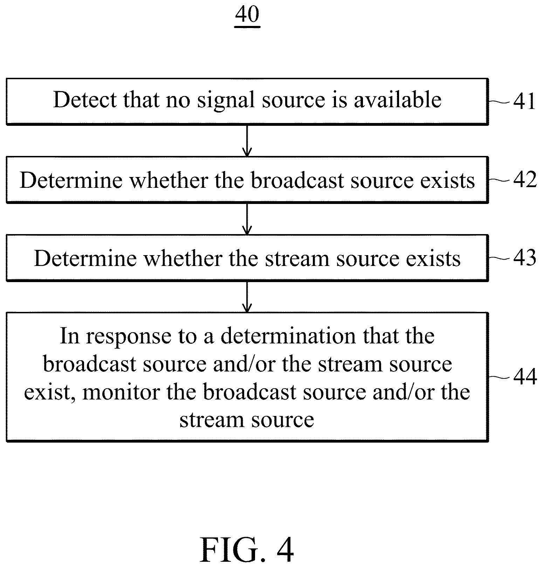

FIG. 4 is a flow diagram of the method 40 for recovering playback in accordance with the embodiments of the present disclosure. The method 40 can be performed by the electronic device 10. In operation 41, the controller 11 detects that no signal source is available. In response to a determination that no signal source is available, the controller 11 performs operations 42~44. In operation 42, the controller 11 determines whether a broadcast source exists. In operation 43, the controller 11 determines whether the stream source exists. In operation 44, in response to a determination that the broadcast source and/or the stream source exist the controller 11 monitors the broadcast source and/or the stream source.

Preferably, operation 42 comprises determining whether the memory 17 stores information corresponding to the broadcast source via the controller 11. Preferably, operation 43 comprises determining whether the memory 17 stores information corresponding to the stream source via the controller 11. Preferably, the operation of monitoring the broadcast source and the stream source comprises: determining whether the broadcast signal interface 15 receives a signal via the tuner 13 or the modulator-demodulator 14; and determining whether the network interface 16 receives a signal via the controller 11.

While the invention has been described by way of example and in terms of the preferred embodiments, it should be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A method (40) for recovering playback, comprising:
detecting (41), via a controller (11) of an electronic device (10), that no signal source is available, wherein the electronic device (10) uses a digital video broadcasting Internet, DVB-I, standard;
in response to a determination that no signal source is available:
determining (42), via the controller (11), whether a broadcast source exists;
determining (43), via the controller (11), whether at least one stream source exists; and
in response to a determination that the broadcast source and/or the stream source exist, monitoring (44) the broadcast source and/or the stream source;
wherein the broadcast source provides signals using DVB standard;
wherein the stream source provides signals from the Internet.

2. The method as claimed in claim 1, wherein the operation of determining whether the broadcast source exists and the operation of determining whether the at least one stream source exists comprises:
the operation of determining whether the broadcast source exists is performed in advance of the operation of determining whether the at least one stream source exists.

3. The method as claimed in claim 1 or 2, wherein the operation of determining whether the broadcast source exists comprises:
determining, via the controller (11), whether a memory (17) of the electronic device (10) stores information corresponding to the broadcast source;
wherein the operation of determining whether the stream source exists comprises:
determining, via the controller (11), whether the memory (17) of the electronic device (10) stores information corresponding to the stream source.

4. The method as claimed in any one of claims 1 to 3, wherein the operation of monitoring the broadcast source and the stream source comprises:
determining, via a tuner (13) or a modulator-demodulator (14), whether the broadcast signal interface (15) receives a signal; and
determining, via the controller (11), whether the network interface (16) receives a signal.

5. The method as claimed in any one of claims 1 to 4, further comprising:
in response to a determination that the broadcast source and/or the stream source are available, playing contents according to a signal from the broadcast source on a display (12).

6. The method as claimed in any one of claims 1 to 5, further comprising:
in response to a determination that the broadcast source is available, playing contents according to the signal from the broadcast source on a display (12).

7. The method as claimed in any one of claims 1 to 6, further comprising:
in response to a determination that the broadcast source isn't available and the stream source is available, playing contents according to the signal from the stream source on a display (12).

8. The method as claimed in claim 7, wherein the operation of playing contents according to the signal from the stream source comprises:
selecting, via the controller (11), a first stream source with the highest priority among the stream source; and
playing contents according to the signal from the first stream source on the display (12).

9. An electronic device (10), comprising:
a display (12); and
a controller (11), configured to:
detect that no signal source is available;
wherein in response to a determination that no signal source is available, the controller (11) is further configured to:
determine whether a broadcast source exists;
determine whether at least one stream source exists; and
in response to a determination that the broadcast source and/or the stream source exist, monitor the broadcast source and/or the stream source;
wherein the electronic device (10) uses a digital video broadcasting Internet, DVB-I, standard;
wherein the broadcast source provides signals using a DVB standard;
wherein the stream source provides signals from the Internet.

10. The electronic device (10) as claimed in claim 9, wherein the operation of determining whether the broadcast source exists and the operation of determining whether the at least one stream source exists comprises:
the operation of determining whether the broadcast source exists is performed in advance of the operation of determining whether the at least one stream source exists.

11. The electronic device (10) as claimed in claim 9, wherein the electronic device (10) further comprises a broadcast signal interface (15) and a network interface (16);
wherein the operation of determining whether the broadcast source exists comprises:
determining, via the controller (11), whether a memory (17) of the electronic device (10) stores information corresponding to the broadcast source;
wherein the operation of determining whether the stream source exists comprises:
determining, via the controller (11), whether the memory (17) of the electronic device (10) stores information corresponding to the stream source.

12. The electronic device (10) as claimed in claim 11, wherein the electronic device (10) further comprises a tuner (13) or a modulator-demodulator (14);
wherein the operation of monitoring the broadcast source and the stream source comprises:
determining, via the tuner (13) or the modulator-demodulator (14), whether the broadcast signal interface (15) receives a signal; and
determining, via the controller (11), whether the network interface (16) receives a signal.

13. The electronic device (10) as claimed in any one of claims 9 to 12, wherein in response to a determination that the broadcast source and the stream source are available, the controller (11) is further configured to play contents according to a signal from the broadcast source on the display (12).

14. The electronic device (10) as claimed in any one of claim 9 to 13, wherein in response to a determination that the broadcast source is available, the controller (11) is further configured to play contents according to the signal from the broadcast source on the display (12).

15. The electronic device (10) as claimed in any one of claims 9 to 14, wherein in response to a determination that the broadcast source isn't available and the stream source is available, the controller (11) is further configured to play contents according to the signal from the stream source on the display (12);
wherein the operation of playing contents according to the signal from the stream source comprises:
selecting a first stream source with the highest priority among the stream source; and
playing contents according to the signal from the first stream source on the display (12).

## Amended claims

### Amended claims in accordance with Rule 137(2) EPC.

**1.** A method (40) for recovering playback, comprising:
detecting (41), via a controller (11) of an electronic device (10), that no signal source is available; and
in response to a determination that no signal source is available:
determining (43), via the controller (11), whether at least one stream source exists;
wherein the stream source provides signals from the Internet;
wherein a broadcast source provides signals using digital video broadcasting, DVB, standard;
**characterized in that**
in response to said determination that no signal source is available:
further determining (42), via the controller (11), whether the broadcast source exists; and
in response to a determination that the broadcast source and/or the stream source exist, monitoring (44) the broadcast source and/or the stream source, and
in response to a determination that the broadcast source isn't available and the stream source is available, performing an operation of playing contents according to the signal from the stream source on a display (12) comprising: selecting, via the controller (11), a first stream source with the highest priority among the stream source, and playing contents according to the signal from the first stream source on the display (12);
wherein the electronic device (10) uses a digital video broadcasting Internet, DVB-I, standard.

**2.** The method as claimed in claim 1, wherein the operation of determining whether the broadcast source exists and the operation of determining whether the at least one stream source exists comprises:
the operation of determining whether the broadcast source exists is performed in advance of the operation of determining whether the at least one stream source exists.

**3.** The method as claimed in claim 1 or 2, wherein the operation of determining whether the broadcast source exists comprises:
determining, via the controller (11), whether a memory (17) of the electronic device (10) stores information corresponding to the broadcast source;
wherein the operation of determining whether the stream source exists comprises:
determining, via the controller (11), whether the memory (17) of the electronic device (10) stores information corresponding to the stream source.

**4.** The method as claimed in any one of claims 1 to 3, wherein the operation of monitoring the broadcast source and the stream source comprises:
determining, via a tuner (13) or a modulator-demodulator (14), whether the broadcast signal interface (15) receives a signal; and
determining, via the controller (11), whether the network interface (16) receives a signal.

**5.** The method as claimed in any one of claims 1 to 4, further comprising:
in response to a determination that the broadcast source and/or the stream source are available, playing contents according to a signal from the broadcast source on a display (12).

**6.** The method as claimed in any one of claims 1 to 5, further comprising:
in response to a determination that the broadcast source is available, playing contents according to the signal from the broadcast source on a display (12).

**7.** An electronic device (10), comprising:
a display (12); and
a controller (11), configured to:
detect that no signal source is available;
wherein in response to a determination that no signal source is available, the controller (11) is further configured to:
determine whether at least one stream source exists;
wherein the stream source provides signals from the Internet;
wherein a broadcast source provides signals using a digital video broadcasting, DVB, standard;
**characterized in that**
in response to said determination that no signal source is available, the controller (11) is further configured to:
further determine whether the broadcast source exists; and
in response to a determination that the broadcast source and/or the stream source exist, monitor the broadcast source and/or the stream source, and
in response to a determination that the broadcast source isn't available and the stream source is available, perform an operation of playing contents according to the signal from the stream source on the display (12) comprising: selecting a first stream source with the highest priority among the stream source, and playing contents according to the signal from the first stream source on the display (12);
wherein the electronic device (10) uses a digital video broadcasting Internet, DVB-I, standard.

**8.** The electronic device (10) as claimed in claim 7, wherein the operation of determining whether the broadcast source exists and the operation of determining whether the at least one stream source exists comprises:
the operation of determining whether the broadcast source exists is performed in advance of the operation of determining whether the at least one stream source exists.

**9.** The electronic device (10) as claimed in claim 7, wherein the electronic device (10) further comprises a broadcast signal interface (15) and a network interface (16);
wherein the operation of determining whether the broadcast source exists comprises:
determining, via the controller (11), whether a memory (17) of the electronic device (10) stores information corresponding to the broadcast source;
wherein the operation of determining whether the stream source exists comprises:
determining, via the controller (11), whether the memory (17) of the electronic device (10) stores information corresponding to the stream source.

**10.** The electronic device (10) as claimed in claim 9, wherein the electronic device (10) further comprises a tuner (13) or a modulator-demodulator (14);
wherein the operation of monitoring the broadcast source and the stream source comprises:
determining, via the tuner (13) or the modulator-demodulator (14), whether the broadcast signal interface (15) receives a signal; and
determining, via the controller (11), whether the network interface (16) receives a signal.

**11.** The electronic device (10) as claimed in any one of claims 7 to 10, wherein in response to a determination that the broadcast source and the stream source are available, the controller (11) is further configured to play contents according to a signal from the broadcast source on the display (12).

**12.** The electronic device (10) as claimed in any one of claim 7 to 11, wherein in response to a determination that the broadcast source is available, the controller (11) is further configured to play contents according to the signal from the broadcast source on the display (12).

**1.** A method (40) for recovering playback, comprising:
detecting (41), via a controller (11) of an electronic device (10), that no signal source is available; and
in response to a determination that no signal source is available:
determining (43), via the controller (11), whether at least one stream source exists;
wherein the stream source provides signals from the Internet;
wherein a broadcast source provides signals using digital video broadcasting, DVB, standard;
**characterized in that**
in response to said determination that no signal source is available:
further determining (42), via the controller (11), whether the broadcast source exists; and
in response to a determination that the broadcast source and/or the stream source exist, monitoring (44) the broadcast source and/or the stream source, and
when both of the broadcast source and the stream source are available (36), playing (37) contents according to a signal from the broadcast source on a display (12), wherein the broadcast source has a higher priority than the stream source;
wherein the electronic device (10) uses a digital video broadcasting Internet, DVB-I, standard.

**2.** The method as claimed in claim 1, wherein the operation of determining whether the broadcast source exists and the operation of determining whether the at least one stream source exists comprises:
the operation of determining whether the broadcast source exists is performed in advance of the operation of determining whether the at least one stream source exists.

**3.** The method as claimed in claim 1 or 2, wherein the operation of determining whether the broadcast source exists comprises:
determining, via the controller (11), whether a memory (17) of the electronic device (10) stores information corresponding to the broadcast source;
wherein the operation of determining whether the stream source exists comprises:
determining, via the controller (11), whether the memory (17) of the electronic device (10) stores information corresponding to the stream source.

**4.** The method as claimed in any one of claims 1 to 3, wherein the operation of monitoring the broadcast source and the stream source comprises:
determining, via a tuner (13) or a modulator-demodulator (14), whether the broadcast signal interface (15) receives a signal; and
determining, via the controller (11), whether the network interface (16) receives a signal.

**5.** The method as claimed in any one of claims 1 to 4, further comprising:
in response to a determination that the broadcast source is available, playing contents according to the signal from the broadcast source on a display (12).

**6.** The method as claimed in any one of claims 1 to 5, further comprising:
in response to a determination that the broadcast source isn't available and the stream source is available, playing contents according to the signal from the stream source on a display (12).

**7.** The method as claimed in claim 6, wherein the operation of playing contents according to the signal from the stream source comprises:
selecting, via the controller (11), a first stream source with the highest priority among the stream source; and
playing contents according to the signal from the first stream source on the display (12).

**8.** An electronic device (10), comprising:
a display (12); and
a controller (11), configured to:
detect that no signal source is available;
wherein in response to a determination that no signal source is available, the controller (11) is further configured to:
determine whether at least one stream source exists;
wherein the stream source provides signals from the Internet;
wherein a broadcast source provides signals using a digital video broadcasting, DVB, standard;
**characterized in that**
in response to said determination that no signal source is available, the controller (11) is further configured to:
further determine whether the broadcast source exists; and
in response to a determination that the broadcast source and/or the stream source exist, monitor the broadcast source and/or the stream source, and
when both of the broadcast source and the stream source are available, play contents according to a signal from the broadcast source on a display (12), wherein the broadcast source has a higher priority than the stream source;
wherein the electronic device (10) uses a digital video broadcasting Internet, DVB-I, standard.

**9.** The electronic device (10) as claimed in claim 8, wherein the operation of determining whether the broadcast source exists and the operation of determining whether the at least one stream source exists comprises:
the operation of determining whether the broadcast source exists is performed in advance of the operation of determining whether the at least one stream source exists.

**10.** The electronic device (10) as claimed in claim 8, wherein the electronic device (10) further comprises a broadcast signal interface (15) and a network interface (16);
wherein the operation of determining whether the broadcast source exists comprises:
determining, via the controller (11), whether a memory (17) of the electronic device (10) stores information corresponding to the broadcast source;
wherein the operation of determining whether the stream source exists comprises:
determining, via the controller (11), whether the memory (17) of the electronic device (10) stores information corresponding to the stream source.

**11.** The electronic device (10) as claimed in claim 10, wherein the electronic device (10) further comprises a tuner (13) or a modulator-demodulator (14);
wherein the operation of monitoring the broadcast source and the stream source comprises:
determining, via the tuner (13) or the modulator-demodulator (14), whether the broadcast signal interface (15) receives a signal; and
determining, via the controller (11), whether the network interface (16) receives a signal.

**12.** The electronic device (10) as claimed in any one of claim 8 to 11, wherein in response to a determination that the broadcast source is available, the controller (11) is further configured to play contents according to the signal from the broadcast source on the display (12).

**13.** The electronic device (10) as claimed in any one of claims 8 to 12, wherein in response to a determination that the broadcast source isn't available and the stream source is available, the controller (11) is further configured to play contents according to the signal from the stream source on the display (12);
wherein the operation of playing contents according to the signal from the stream source comprises:
selecting a first stream source with the highest priority among the stream source; and
playing contents according to the signal from the first stream source on the display (12).

**1.** A method (40) for recovering playback, comprising:
detecting (41), via a controller (11) of an electronic device (10), that no signal source is available; and
in response to a determination that no signal source is available:
determining (43), via the controller (11), whether at least one stream source exists;
wherein the stream source provides signals from the Internet;
wherein a broadcast source provides signals using digital video broadcasting, DVB, standard;
**characterized in that**
in response to said determination that no signal source is available:
further determining (42), via the controller (11), whether the broadcast source exists; and
in response to a determination that the broadcast source and/or the stream source exist, monitoring (44) the broadcast source and/or the stream source;
wherein the electronic device (10) uses a digital video broadcasting Internet, DVB-I, standard.

**2.** The method as claimed in claim 1, wherein the operation of determining whether the broadcast source exists and the operation of determining whether the at least one stream source exists comprises:
the operation of determining whether the broadcast source exists is performed in advance of the operation of determining whether the at least one stream source exists.

**3.** The method as claimed in claim 1 or 2, wherein the operation of determining whether the broadcast source exists comprises:
determining, via the controller (11), whether a memory (17) of the electronic device (10) stores information corresponding to the broadcast source;
wherein the operation of determining whether the stream source exists comprises:
determining, via the controller (11), whether the memory (17) of the electronic device (10) stores information corresponding to the stream source.

**4.** The method as claimed in any one of claims 1 to 3, wherein the operation of monitoring the broadcast source and the stream source comprises:
determining, via a tuner (13) or a modulator-demodulator (14), whether the broadcast signal interface (15) receives a signal; and
determining, via the controller (11), whether the network interface (16) receives a signal.

**5.** The method as claimed in any one of claims 1 to 4, further comprising:
in response to a determination that the broadcast source and/or the stream source are available, playing contents according to a signal from the broadcast source on a display (12).

**6.** The method as claimed in any one of claims 1 to 5, further comprising:
in response to a determination that the broadcast source is available, playing contents according to the signal from the broadcast source on a display (12).

**7.** The method as claimed in any one of claims 1 to 6, further comprising:
in response to a determination that the broadcast source isn't available and the stream source is available, playing contents according to the signal from the stream source on a display (12).

**8.** The method as claimed in claim 7, wherein the operation of playing contents according to the signal from the stream source comprises:
selecting, via the controller (11), a first stream source with the highest priority among the stream source; and
playing contents according to the signal from the first stream source on the display (12).

**9.** An electronic device (10), comprising:
a display (12); and
a controller (11), configured to:
detect that no signal source is available;
wherein in response to a determination that no signal source is available, the controller (11) is further configured to:
determine whether at least one stream source exists;
wherein the stream source provides signals from the Internet;
wherein a broadcast source provides signals using a digital video broadcasting, DVB, standard;
**characterized in that**
in response to said determination that no signal source is available, the controller (11) is further configured to:
further determine whether the broadcast source exists; and
in response to a determination that the broadcast source and/or the stream source exist, monitor the broadcast source and/or the stream source;
wherein the electronic device (10) uses a digital video broadcasting Internet, DVB-I, standard.

**10.** The electronic device (10) as claimed in claim 9, wherein the operation of determining whether the broadcast source exists and the operation of determining whether the at least one stream source exists comprises:
the operation of determining whether the broadcast source exists is performed in advance of the operation of determining whether the at least one stream source exists.

**11.** The electronic device (10) as claimed in claim 9, wherein the electronic device (10) further comprises a broadcast signal interface (15) and a network interface (16);
wherein the operation of determining whether the broadcast source exists comprises:
determining, via the controller (11), whether a memory (17) of the electronic device (10) stores information corresponding to the broadcast source;
wherein the operation of determining whether the stream source exists comprises:
determining, via the controller (11), whether the memory (17) of the electronic device (10) stores information corresponding to the stream source.

**12.** The electronic device (10) as claimed in claim 11, wherein the electronic device (10) further comprises a tuner (13) or a modulator-demodulator (14);
wherein the operation of monitoring the broadcast source and the stream source comprises:
determining, via the tuner (13) or the modulator-demodulator (14), whether the broadcast signal interface (15) receives a signal; and
determining, via the controller (11), whether the network interface (16) receives a signal.

**13.** The electronic device (10) as claimed in any one of claims 9 to 12, wherein in response to a determination that the broadcast source and the stream source are available, the controller (11) is further configured to play contents according to a signal from the broadcast source on the display (12).

**14.** The electronic device (10) as claimed in any one of claim 9 to 13, wherein in response to a determination that the broadcast source is available, the controller (11) is further configured to play contents according to the signal from the broadcast source on the display (12).

**15.** The electronic device (10) as claimed in any one of claims 9 to 14, wherein in response to a determination that the broadcast source isn't available and the stream source is available, the controller (11) is further configured to play contents according to the signal from the stream source on the display (12);
wherein the operation of playing contents according to the signal from the stream source comprises:
selecting a first stream source with the highest priority among the stream source; and
playing contents according to the signal from the first stream source on the display (12).
